# EUROPEAN PATENT SPECIFICATION

(11) **EP 3 238 318 B1**
(45) Date of publication and mention of the grant of the patent: **04.09.2019**
(21) Application number: 15873869.0
(22) Date of filing: 09.10.2015
(51) Int. Cl.: H02J 7/00, H01F 38/14, H02J 5/00

(54) **WIRELESS POWER TRANSMITTING COIL DISPOSED AROUND A PROTRUDING MAGNETIC COMPONENT**
UM EINE ÜBERSTEHENDE MAGNETISCHE KOMPONENTE HERUM ANGEORDNETE DRAHTLOSLEISTUNGSSENDESPULE
BOBINE DE TRANSMISSION D'ÉNERGIE SANS FIL DISPOSÉE AUTOUR D'UN ÉLÉMENT MAGNÉTIQUE FAISANT SAILLIE

(30) Priority: 23.12.2014 US 201414580594
(43) Date of publication of application: 01.11.2017
(73) Proprietor: Intel Corporation, Santa Clara, CA 95054 (US)
(72) Inventor: PORAT, Shahar, 30860 EinCarmel (IL); GOLTMAN, Gennady, 32447 Haifa (IL); SOFER, Sergey, 75412 Rishon Lezion (IL); POGORELIK, Oleg, 73133 Lapid (IL); PRIEV, Avi, 91031 Jerusalem (IL); YANG, Songnan, San Jose, California 95123 (US)
(74) Representative: Viering, Jentschura & Partner mbB Patent- und Rechtsanwälte
(86) International application number: PCT/US2015/054823
(87) International publication number: WO 2016/105629

(56) References cited:
- JP-A- H04 185 236
- JP-A- 2004 033 596
- JP-A- 2010 014 531
- JP-A- 2014 180 166
- KR-A- 20130 015 244
- KR-A- 20140 095 918
- US-A1- 2011 115 430
- US-A1- 2014 008 995
- US-A1- 2014 265 555
- US-B2- 7 180 265

## Description

### Cross Reference to Related Application

The present application claims benefit of the filing date of U.S. Patent Application No. 14/580,584, filed December 23, 2014.

### TECHNICAL FIELD

This disclosure relates generally to techniques for wireless charging. Specifically, this disclosure relates to wireless power transmitting coil formed in around a protruding magnetic component.

### BACKGROUND ART

A basic wireless charging system may include a wireless power transmitter unit (PTU) and a wireless power receiving unit (PRU). For example, a PTU may include a transmit (Tx) coil, and a PRU may include receive (Rx) coil. Magnetic resonance wireless charging may employ a magnetic coupling between the Tx coil and the Rx coil. As wearable computing devices become increasingly popular, wireless charging systems may be implemented as charging systems for the wearable devices as opposed, or even in addition, to traditional wired charging systems. However, in many cases, wearable computing devices vary in shape and size making it challenging to find designs wherein wearable computing devices can be charged.

US 7 180 265 B2 describes a charging device including a battery; a first induction coil coupled to the battery; and an induction core extending through the first induction coil. The induction core has a portion which extends in an outward direction from the charging device and is adapted to removably couple with a second induction coil of a portable electronic device by extending into the second induction coil.

US 2011/115430 A1 describes an apparatus for generating a first alternating current in a resonant receiving coil at a resonant frequency in a self-resonant circuit tuned to resonate at substantially the same resonant frequency as a resonant transmitting coil in a self-resonant circuit of a wireless charger, the resonant receiving coil operating as a magnetically coupled resonator with the resonant transmitting coil.

The invention is defined in the appended claims.

### BRIEF DESCRIPTION OF THE DRAWINGS

FIG. 1 is block diagram of a PTU to provide power to a PRU, wherein a magnetic component protrudes from the PTU;
FIG. 2 is an illustration of a perspective view of a wireless power transmitting coil and a protruding magnetic component;
Fig. 3 is an illustration of a perspective view of a wireless power transmitting coil and a non-linear protruding magnetic component;
Fig. 4 is an illustration of a perspective view of a wireless power transmitting coil and a protruding magnetic component configured to receive a wireless propagation device;
Fig. 5 is an illustration of a perspective view of a wireless power transmitting coil and a protruding magnetic component configured to include multiple wireless power transmitting coils;
Fig. 6 is an illustration of a perspective view of a wireless power transmitting coil and a protruding magnetic component configured to provide power to multiple devices to be charged; and
Fig. 7 is a flow diagram of a method for forming a device for wireless charging.

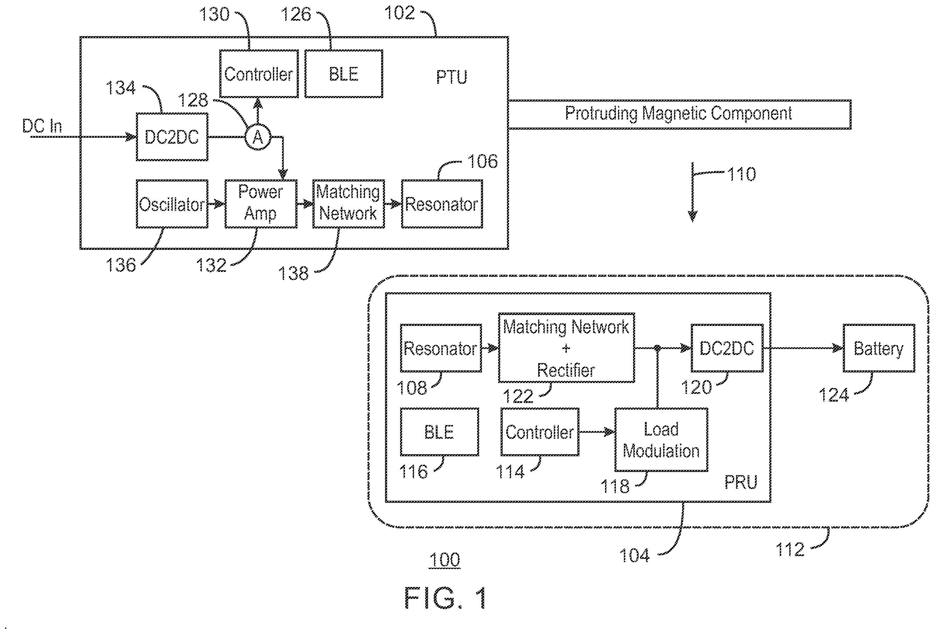

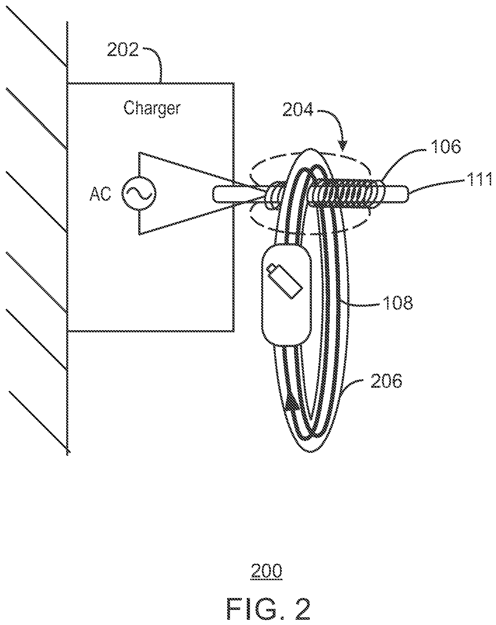

The same numbers are used throughout the disclosure and the figures to reference like components and features. Numbers in the 100 series refer to features originally found in Fig. 1; numbers in the 200 series refer to features originally found in Fig. 2; and so on.

### Description of the Aspects

The present disclosure relates generally to techniques for wireless charging. Specifically, the techniques described herein include a wireless power transmitting coil of a charging device and a protruding magnetic component. In some cases, the wireless power transmitting (Tx) coil is wrapped around at least a portion of the protruding magnetic component. For example, turns of the wireless power Tx coil may be wrapped around the protruding magnetic component, wherein each turn of the Tx coil follows an entire perimeter of a cross section of the protruding magnetic component. In this scenario, the protruding magnetic component may be hung from a wall, or otherwise disposed to receive electrically chargeable devices, such as a smart watch having a wireless power receiving (Rx) coil formed in a loop of the smart watch. Further, the techniques described herein include a power propagation device, such as a hanger, that includes a passive wireless power circuit configured to receive power from the wireless power Tx coil and provide that power to a wearable device, such as a shirt to be hung on the hanger and having a wireless power Rx coil of its own. Hanging a smart watch or a chargeable shirt may be a natural behavior, thereby increasing simplicity and ease of use during wireless charging of these types of devices.

In some cases, the techniques discussed herein may be implemented using a wireless charging standard protocol, such as the specification provided by Alliance For Wireless Power (A4WP) version 1.2.1, May 07, 2014. A wireless power Rx coil may be a component in a power receiving unit (PRU), while a wireless power Tx coil may be a component in a power transmitting unit (PTU), as discussed in more detail below.

Fig. 1 is block diagram of a PTU to provide power to a PRU, wherein a magnetic component protrudes from the PTU. A PTU 102 may couple to a PRU 104 via magnetic inductive coupling between resonators 106, and108, as indicated by the arrow 110. The resonator 106 may be referred to herein as a Tx coil 106 of the PTU 102. The resonator 108 may be referred to herein as a Rx coil 108 of the PRU 104.

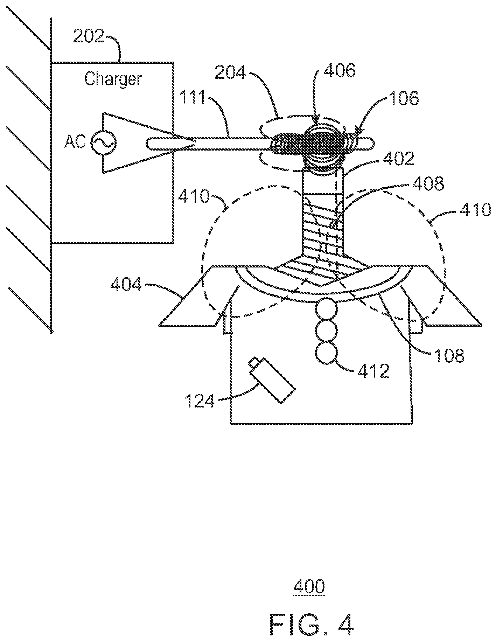

As discussed above, the Tx coil 106 may be formed around a magnetic component 111 protruding from the PTU 102. The protruding magnetic component 111 may be a hook, a bar, a pin, or any type of protrusion configured to receive a looped portion of wireless Rx coil, such as the Rx coil 108. For example, the protruding magnetic component 111 may be a ferromagnetic material, such as iron, nickel-zinc, manganese zinc, or a compound alloy, and may receive a device having at least a looped portion. Such a device is indicated by the dashed circle 112, and examples of such devices are discussed in more detail below. In some cases, the device 112 may be hung on the protruding magnetic component 111. Further, in some cases, the protruding magnetic component 111 may be configured to receive an Rx coil, such as the Rx coil 108 of the PRU 104, within a loop of the Rx coil. In this scenario, the loop of the Rx coil 108 may be non-concentric with an axis associated with the protruding magnetic component 111. This arrangement may enable the protruding magnetic component 111 including the Tx coil 106 to be aligned with the Rx coil 108, and provide a more efficient inductive coupling as a magnetic flux of a field associated with the Tx coil 106 may be closer to the Rx coil 108. Further, in some cases, the protruding magnetic component 111 may be configured to receive other types of devices, such as a power propagation device configured to pass power from the Tx coil 106 to chargeable device, such as a wearable computing device, as discussed in more detail below in regard to Fig. 4. Although the protruding magnetic component 111 is illustrated in Fig. 1 as protruding from the PTU 102, in some cases the protruding magnetic component 111 may include one or more components of the PTU 102. Further, it is contemplated that the PRU 102 may be disposed within the protruding magnetic component 111 in as components become smaller in the future.

As discussed above, the Rx coil 108, as well as other components of discussed below, may be embedded in the device having at least a looped portion, as indicated at 112. The device 112 may be a wearable device, such as a smart watch, smart bracelet, smart necklace, smart glasses, a power propagating device, and the like. As illustrated and discussed in more detail below, the loop of the device 112 may be a result of a shape of the device 112.

The PRU 104 may include a controller 114 configured to detect current received at the Rx coil 108 resulting from an inductive coupling between the Tx coil 106, the protruding magnetic component 111, and the Rx coil 108. In some cases, the controller 114 may be configured to initiate a wireless data broadcast indicating a resonant frequency of the Rx coil 108.

The wireless data transmission component may be Bluetooth Low Energy (BLE) module 116 in some cases. In some cases, the wireless data transmission component may be integrated as operations of the controller 114, a load modulation circuit 118, a direct current to direct current (DC2DC) converter 120, or any combination thereof, wherein the data transmission may be indicated by patterns in the load modulation.

As illustrated in Fig. 1, the DC2DC converter 120 provides a DC output to a battery 124, or another current/power consuming component. The DC2DC converter 120 may convert DC received as a result of the inductive coupling of the Tx coil 106, the protruding magnetic component 111, the Rx coil 108, and the rectifier 122.

The PTU 102 may include a BLE module 126 configured to communicate with the BLE module 116. The PTU 102 may also include a current sensor 128, a controller 130, a power amplifier 132, a DC2DC converter 134, an oscillator 136, and a matching network 138. The current sensor 128 may be an ampere meter, a volt meter, or any other meter configured to sense load variations occurring due to inductive coupling between the PTU 102 and another object, such as the PRU 104. The current sensor 128 may provide an indication of load change to a controller 130 of the PTU 102. The controller 130 may power on the power amplifier 132 configured to receive direct current (DC) from the DC2DC converter 134, and to amplify and oscillate the current. An oscillator 136 may oscillate the power provided at a given frequency and a matching network 138 may be used to match the amplified oscillation provided to the resonator 106 of the PTU 102.

The block diagram of Fig. 1 is not intended to indicate that the PTU 102 and/or the PRU 104 are to include all of the components shown in Fig. 1. Further, the PTU 102 and/or the PRU 104 may include any number of additional components not shown in Fig. 1, depending on the details of the specific implementation.

Fig. 2 is an illustration of a perspective view of a wireless power transmitting coil and a protruding magnetic component. As discussed above, a wireless power Rx coil, such as the Tx coil 106 of Fig. 1, may be disposed around a protruding magnetic component, such as the protruding magnetic component 111 of Fig. 1. A charger 202 may include one or more components of the PTU 102 of Fig. 1. In any event, the charger 202 may provide an alternating current to the TX coil 106. The current may result in a magnetic field, indicated at the dashed circles 204, having a magnetic flux.

The magnetic flux may move through an Rx coil, such as the Rx coil 108 of Fig. 1. The Rx coil 108 may be embedded in a wearable device 206. In Fig. 2, the wearable device 206 may be an example of the device 112 discussed above. In this example, the wearable device 206 is hung on the protruding magnetic component 111. This example further illustrates how the protruding magnetic component 111 is configured to receive the wearable device 206 such that the Rx coil 108 is not-concentric with an axis of the protruding magnetic component. This aspect enables a more efficient wireless power transfer for various sizes of wearable devices as the turns of the Rx coil 108 are closer to the magnetic field 204, than if the Rx coil 108 was concentric to the axis of the protruding magnetic component 111.

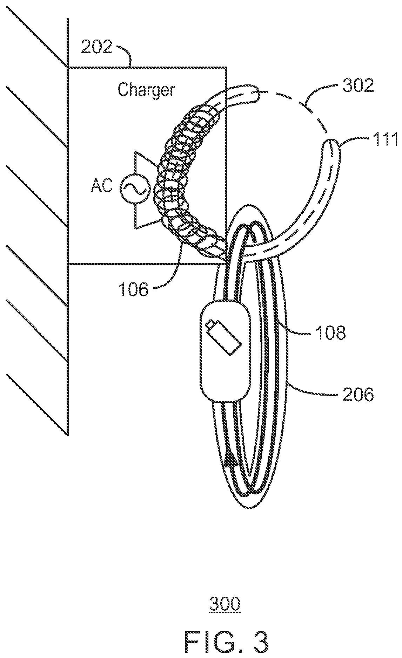

Fig. 3 is an illustration of a perspective view of a wireless power transmitting coil and a non-linear protruding magnetic component. Similar to Fig. 2, a wireless power TX coil, such as the Tx coil 106 of Fig. 1, may be disposed around a protruding magnetic component, such as the protruding magnetic component 111 of Fig. 1. However, in this example, the protruding magnetic component 111 is formed a non-linear shape. This formation may provide various benefits. First, the protruding magnetic component 111 may be used as a hook, rather than a linear rod, thereby securing the wearable device 206 to the protruding magnetic component 111. Further, the non-linear formation of the protruding magnetic component 111 may direct a magnetic field 302 associated with current flow through the TX coil 106 from the charger 202. A directed current flow may increase the magnetic field in a direction towards the Rx coil 108, rather than towards a center of the wearable device 206.

Fig. 4 is an illustration of a perspective view of a wireless power transmitting coil and a protruding magnetic component configured to receive a wireless propagation device. As discussed above, a device including a power propagating device, generally indicated at 402, may be hung from the protruding magnetic component 111. The power propagating device 402, in this example, is a hanger to hold a wearable device, generally indicated at 404. As illustrated in Fig. 4, wearable device 404 is a shirt, having a battery and a wireless power receiving coil, such as the battery 124 and Rx coil 108 of Fig. 1. Rather than directly hanging the wearable device 404 on the protruding magnetic component 111, the power propagating device 402 may couple to the Tx coil 106 at an Rx coil 406 of the power propagating device 402, through magnetic flux of the magnetic fields 204 discussed above in regard to Fig. 2.

The Rx coil 406 may be coupled to a Tx coil 408 of the power propagating device 402. The magnetic fields of the Tx coil 408, generally indicated by the dashed circles 410. A magnetic flux of the fields 410 may be received at the RX coil 108 of the wearable device 404. In some cases, the wearable device 404 may include multiple RX coils including the RX coil 108 formed around a shoulder area of the wearable device 404, as well as RX coils (not shown) formed around arm areas of the wearable device 404. Further, in some cases, the wearable device 404 may include other wearable devices indicated at 412. The other wearable devices 412 may be smart buttons, for example, communicatively coupled to receive power from the battery 124, in some cases. The other wearable devices 412 may also be coupled to the Tx coil 408 of the power propagating device 402. In this example, the other wearable devices 412 may be include their own Rx coils, such as the Rx coil 108.

The Rx coil 406 and the Tx coil 408 may be referred to as a passive power repeater circuit. In example, the power propagating device 402 may include additional passive power repeater circuits. Additional power circuits may generate a phase shift such that load increases and decreases are reflected to the PTU 102. In this case, a constant current source implementation may be achieved providing more power to devices to be charged as their associated loads are presented.

In Fig. 4, the wearable device 404 may be an example of the device 112 discussed above. In this example, the wearable device 404 is hung on the protruding magnetic component 111 via a hanger having a passive power circuit. This aspect, as well as any other aspect discussed herein, may increase ease of use for charging wearable devices.

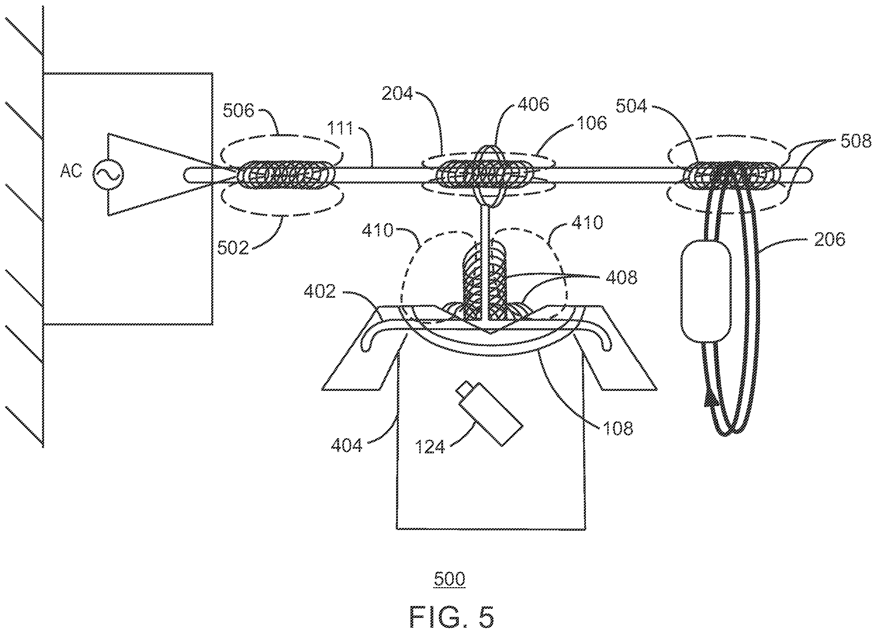

Fig. 5 is an illustration of a perspective view of a wireless power transmitting coil and a protruding magnetic component configured to include multiple wireless power transmitting coils. In some cases, the Tx coil 106 is one of multiple Tx coils, including Tx coils 502 and 504, disposed around the protruding magnetic component 111. As illustrated in Fig. 5, multiple coils, including Tx coil 106, 502, and 504, may enable the protruding magnetic element 111 to receive multiple components including the wearable device 206 and the wearable device 404 discussed above in regard to Figs. 2-4. Each of the Tx coils 106, 502, and 504, may emit a magnetic field, as indicated at 204, 506, and 508, respectively, as current propagates through each the Tx coils 106, 502, and 504. As discussed in regard to Fig. 4 above, the power propagation device 402 may propagate power to the wearable device 404. In some embodiments, the Tx coil 408 may be implemented along a vertical portion of a hanger as well as horizontal, or arm portions of the hanger.

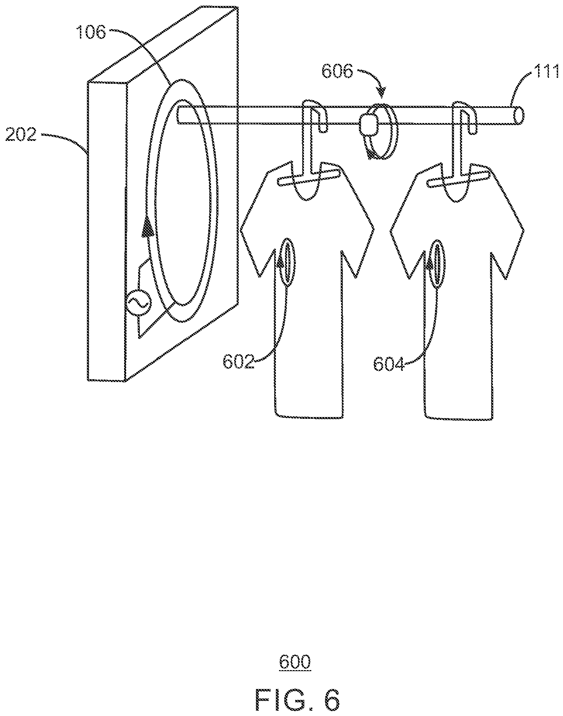

Fig. 6 is an illustration of a perspective view of a wireless power transmitting coil and a protruding magnetic component configured to provide power to multiple devices to be charged. In some cases, the Tx coil 106 may be integrated with a planar surface of the charger 202. As illustrated in Fig. 6, Rx coils 602 and 604 may receive power from the Tx coil 106. The Rx coils 602 and 604 may be components of a PRU, such as the PRU 104 of Fig. 1. Simultaneous charging of a smart watch 606 may occur by placing the smart watch on the protruding magnetic component 111.

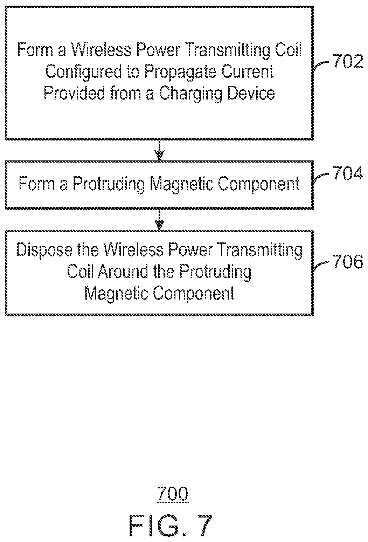

Fig. 7 is a flow diagram of a method for forming a device for wireless charging. The method 700 may include forming a wireless power transmitting coil configured to propagate current provided from a charging device, the current propagation is to generate a magnetic field at block 702. At block 704, a protruding magnetic component is formed. At 706, the wireless power transmitting coil is disposed around the protruding magnetic component.

In some cases, forming the protruding magnetic component comprises forming the protruding magnetic component in a non-linear shape to guide a direction of the generated magnetic field. For example, the protruding magnetic component maybe formed as hook.

In some cases, forming the protruding magnetic component comprises forming the protruding magnetic component protruding from the charging device. In this case, the protruding magnetic component is configured to receive a device to be charged having a looped shape in a non-concentric disposition to an axis of the protruding magnetic component.

In some cases, the protruding magnetic component is configured to be hung vertically. In this case, the protruding magnetic component is configured to receive a device to be charged having a looped shape by hanging the device to be charged on the protruding magnetic component. Further, method 700 may include forming a power propagation device having a looped portion. The protruding magnetic component is configured to receive the power propagation device comprising by hanging the looped portion on the protruding magnetic component.

In some cases, the wireless power transmitting coil is a first wireless power transmitting coil. Forming the power propagation device may include forming a first wireless power receiving coil configured to receive a magnetic flux of the magnetic field from the first wireless power transmitting coil, wherein receiving the magnetic flux generates a current. Forming the power propagation device may also include forming a second wireless power transmitting coil configured to receive the current from the first wireless power receiving coil, and configured to generate a magnetic field having a magnetic flux based, in part, on the received current. In this scenario, the method may further include forming a device to be charged, wherein forming the power propagation device comprises configuring the power propagation device to receive the device to be charged by hanging the device to be charged on the power propagation device. Forming the device to be charged may include forming a second wireless power receiving coil to receive the magnetic flux from the second wireless power transmitting coil of the power propagation device. Forming the power propagation device may include forming a hanger to be hung on the protruding magnetic component. The device to be charged may include a wearable device comprising one or more additional devices to be charged.

In some cases, the wireless power receiving coil is a first wireless power receiving coil. The method 700 may further include forming one or more additional wireless power receiving coil including at least a second wireless power receiving coil disposed around the protruding magnetic component.

Not all components, features, structures, characteristics, etc. described and illustrated herein need be included in a particular aspect or aspects. If the specification states a component, feature, structure, or characteristic "may", "might", "can" or "could" be included, for example, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.

Example 1 includes an apparatus for wireless charging. In this example, the apparatus includes a wireless power transmitting coil configured to propagate current provided from a charging device, wherein the current propagation is to generate a magnetic field, and a protruding magnetic component, wherein the wireless power transmitting coil is disposed around the protruding magnetic component.

In Example 1, the protruding magnetic component may be formed in a non-linear shape to guide a direction of the generated magnetic field. In some cases, the protruding magnetic component protrudes from the charging device and is configured to receive a device to be charged having a looped shape in a non-concentric disposition to an axis of the protruding magnetic component. In some cases, the protruding magnetic component is configured to be hung vertically, and the protruding magnetic component is configured to receive a device to be charged having a looped shape by hanging the device to be charged on the protruding magnetic component.

In some cases, the protruding magnetic component is configured to receive a power propagation device comprising a looped portion by hanging the looped portion on the protruding magnetic component. The wireless power transmitting coil may be a first wireless power transmitting coil, and the power propagation device includes a first wireless power receiving coil to receive a magnetic flux of the magnetic field from the first wireless power transmitting coil, wherein receiving the magnetic flux generates a current. The power propagation component may also include a second wireless power transmitting coil configured to receive the current from the first wireless power receiving coil, and configured to generate a magnetic field having a magnetic flux based, in part, on the received current. In some cases, the power propagation device is configured to receive a device to be charged by hanging the device to be charged on the power propagation device. In some cases, the device to be charged comprises a second wireless power receiving coil to receive the magnetic flux from the second wireless power transmitting coil of the power propagation device. In some cases, the power propagation device comprises a hanger to be hung on the protruding magnetic component, and wherein the device to be charged comprises a wearable device comprising one or more additional devices to be charged.

In some cases, the wireless power receiving coil is a first wireless power receiving coil. The apparatus may further include one or more additional wireless power receiving coil including at least a second wireless power receiving coil disposed around the protruding magnetic component. Further, any combination of the cases discussed above in regard to Example 1 is contemplated.

Example 2 includes a method for wireless charging. In this example, the method includes forming a wireless power transmitting coil configured to propagate current provided from a charging device, wherein the current propagation is to generate a magnetic field, and forming a protruding magnetic component, wherein the wireless power transmitting coil is disposed around the protruding magnetic component.

In Example 2, the protruding magnetic component may be formed in a non-linear shape to guide a direction of the generated magnetic field. In some cases, the protruding magnetic component protrudes from the charging device and is configured to receive a device to be charged having a looped shape in a non-concentric disposition to an axis of the protruding magnetic component. In some cases, the protruding magnetic component is configured to be hung vertically, and the protruding magnetic component is configured to receive a device to be charged having a looped shape by hanging the device to be charged on the protruding magnetic component.

In some cases, the protruding magnetic component is configured to receive a power propagation device comprising a looped portion by hanging the looped portion on the protruding magnetic component. The wireless power transmitting coil may be a first wireless power transmitting coil, and the power propagation device includes a first wireless power receiving coil to receive a magnetic flux of the magnetic field from the first wireless power transmitting coil, wherein receiving the magnetic flux generates a current. The power propagation component may also include a second wireless power transmitting coil configured to receive the current from the first wireless power receiving coil, and configured to generate a magnetic field having a magnetic flux based, in part, on the received current. In some cases, the power propagation device is configured to receive a device to be charged by hanging the device to be charged on the power propagation device. In some cases, the device to be charged comprises a second wireless power receiving coil to receive the magnetic flux from the second wireless power transmitting coil of the power propagation device. In some cases, the power propagation device comprises a hanger to be hung on the protruding magnetic component, and wherein the device to be charged comprises a wearable device comprising one or more additional devices to be charged.

In some cases, the wireless power receiving coil is a first wireless power receiving coil. The apparatus may further include one or more additional wireless power receiving coil including at least a second wireless power receiving coil disposed around the protruding magnetic component. Further, any combination of the cases discussed above in regard to Example 2 is contemplated.

Example 3 includes a system for wireless charging. In this example, the system includes a charging device, a wireless power transmitting coil configured to propagate current provided from the charging device, wherein the current propagation is to generate a magnetic field, and a protruding magnetic component, wherein the wireless power transmitting coil is disposed around the protruding magnetic component.

In Example 3, the protruding magnetic component may be formed in a non-linear shape to guide a direction of the generated magnetic field. In some cases, the protruding magnetic component protrudes from the charging device and is configured to receive a device to be charged having a looped shape in a non-concentric disposition to an axis of the protruding magnetic component. In some cases, the protruding magnetic component is configured to be hung vertically, and the protruding magnetic component is configured to receive a device to be charged having a looped shape by hanging the device to be charged on the protruding magnetic component.

In some cases, the protruding magnetic component is configured to receive a power propagation device comprising a looped portion by hanging the looped portion on the protruding magnetic component. The wireless power transmitting coil may be a first wireless power transmitting coil, and the power propagation device includes a first wireless power receiving coil to receive a magnetic flux of the magnetic field from the first wireless power transmitting coil, wherein receiving the magnetic flux generates a current. The power propagation component may also include a second wireless power transmitting coil configured to receive the current from the first wireless power receiving coil, and configured to generate a magnetic field having a magnetic flux based, in part, on the received current. In some cases, the power propagation device is configured to receive a device to be charged by hanging the device to be charged on the power propagation device. In some cases, the device to be charged comprises a second wireless power receiving coil to receive the magnetic flux from the second wireless power transmitting coil of the power propagation device. In some cases, the power propagation device comprises a hanger to be hung on the protruding magnetic component, and wherein the device to be charged comprises a wearable device comprising one or more additional devices to be charged.

In some cases, the wireless power receiving coil is a first wireless power receiving coil. The system may further include one or more additional wireless power receiving coil including at least a second wireless power receiving coil disposed around the protruding magnetic component. Further, any combination of the cases discussed above in regard to Example 3 is contemplated.

Example 4 includes a method for wireless charging. In this example, the method includes forming a means for wireless power transmitting configured to propagate current provided from a charging device, wherein the current propagation is to generate a magnetic field, and forming a protruding magnetic component, wherein the means for wireless power transmitting is disposed around the protruding magnetic component.

In Example 4, the protruding magnetic component may be formed in a non-linear shape to guide a direction of the generated magnetic field. In some cases, the protruding magnetic component protrudes from the charging device and is configured to receive a device to be charged having a looped shape in a non-concentric disposition to an axis of the protruding magnetic component. In some cases, the protruding magnetic component is configured to be hung vertically, and the protruding magnetic component is configured to receive a device to be charged having a looped shape by hanging the device to be charged on the protruding magnetic component.

In some cases, the protruding magnetic component is configured to receive a power propagation device comprising a looped portion by hanging the looped portion on the protruding magnetic component. The means for wireless power transmitting may be a first means for wireless power transmitting, and the power propagation device includes a first wireless power receiving coil to receive a magnetic flux of the magnetic field from the first means for wireless power transmitting, wherein receiving the magnetic flux generates a current. The power propagation component may also include a second means for wireless power transmitting configured to receive the current from the first wireless power receiving coil, and configured to generate a magnetic field having a magnetic flux based, in part, on the received current. In some cases, the power propagation device is configured to receive a device to be charged by hanging the device to be charged on the power propagation device. In some cases, the device to be charged comprises a second wireless power receiving coil to receive the magnetic flux from the second means for wireless power transmitting of the power propagation device. In some cases, the power propagation device comprises a hanger to be hung on the protruding magnetic component, and wherein the device to be charged comprises a wearable device comprising one or more additional devices to be charged.

In some cases, the wireless power receiving coil is a first wireless power receiving coil. The apparatus may further include one or more additional wireless power receiving coil including at least a second wireless power receiving coil disposed around the protruding magnetic component. Further, any combination of the cases discussed above in regard to Example 4 is contemplated.

Example 5 includes a system for wireless charging. In this example, the system includes a charging device, a means for wireless power transmitting configured to propagate current provided from the charging device, wherein the current propagation is to generate a magnetic field, and a protruding magnetic component, wherein the means for wireless power transmitting is disposed around the protruding magnetic component.

In Example 5, the protruding magnetic component may be formed in a non-linear shape to guide a direction of the generated magnetic field. In some cases, the protruding magnetic component protrudes from the charging device and is configured to receive a device to be charged having a looped shape in a non-concentric disposition to an axis of the protruding magnetic component. In some cases, the protruding magnetic component is configured to be hung vertically, and the protruding magnetic component is configured to receive a device to be charged having a looped shape by hanging the device to be charged on the protruding magnetic component.

In some cases, the protruding magnetic component is configured to receive a power propagation device comprising a looped portion by hanging the looped portion on the protruding magnetic component. The means for wireless power transmitting may be a first means for wireless power transmitting, and the power propagation device includes a first wireless power receiving coil to receive a magnetic flux of the magnetic field from the first means for wireless power transmitting, wherein receiving the magnetic flux generates a current. The power propagation component may also include a second means for wireless power transmitting configured to receive the current from the first wireless power receiving coil, and configured to generate a magnetic field having a magnetic flux based, in part, on the received current. In some cases, the power propagation device is configured to receive a device to be charged by hanging the device to be charged on the power propagation device. In some cases, the device to be charged comprises a second wireless power receiving coil to receive the magnetic flux from the second means for wireless power transmitting of the power propagation device. In some cases, the power propagation device comprises a hanger to be hung on the protruding magnetic component, and wherein the device to be charged comprises a wearable device comprising one or more additional devices to be charged.

In some cases, the wireless power receiving coil is a first wireless power receiving coil. The system may further include one or more additional wireless power receiving coil including at least a second wireless power receiving coil disposed around the protruding magnetic component. Further, any combination of the cases discussed above in regard to Example 5 is contemplated.

It is to be noted that, although some aspects have been described in reference to particular implementations, other implementations are possible according to some aspects. Additionally, the arrangement and/or order of circuit elements or other features illustrated in the drawings and/or described herein need not be arranged in the particular way illustrated and described. Many other arrangements are possible according to some aspects.

In each system shown in a figure, the elements in some cases may each have a same reference number or a different reference number to suggest that the elements represented could be different and/or similar. However, an element may be flexible enough to have different implementations and work with some or all of the systems shown or described herein. The various elements shown in the figures may be the same or different. Which one is referred to as a first element and which is called a second element is arbitrary.

It is to be understood that specifics in the aforementioned examples may be used anywhere in one or more aspects. For instance, all optional features of the computing device described above may also be implemented with respect to either of the methods or the computer-readable medium described herein. Furthermore, although flow diagrams and/or state diagrams may have been used herein to describe aspects, the techniques are not limited to those diagrams or to corresponding descriptions herein. For example, flow need not move through each illustrated box or state or in exactly the same order as illustrated and described herein.

The present techniques are not restricted to the particular details listed herein. Indeed, those skilled in the art having the benefit of this disclosure will appreciate that many other variations from the foregoing description and drawings may be made within the scope of the present techniques. Accordingly, it is the following claims including any amendments thereto that define the scope of the present techniques.

## Claims

1. An apparatus for wireless charging, comprising:
a wireless power transmitting coil (106) configured to propagate current provided from a charging device (202), wherein the current propagation is to generate a magnetic field (204, 302, 410, 506, 508) based on a resonant frequency detected from a wireless data broadcast from a controller in a device (206) to be charged with a receiving coil (108); and
a protruding magnetic component (111), wherein the wireless power transmitting coil (106) is disposed around the protruding magnetic component (111) and wherein a power transmitting unit, PTU, (102) is disposed within the protruding magnetic component (111), the PTU (102) comprising a matching network (138) to match an amplified oscillation provided to a resonator (106).

2. The apparatus of claim 1, wherein the protruding magnetic component (111) is formed in a non-linear shape to guide a direction of the generated magnetic field (302).

3. The apparatus of any combination of claims 1-2, wherein the protruding magnetic component (111) protrudes from the charging device (202) and is configured to receive a device (206) to be charged having a looped shape in a non-concentric disposition to an axis of the protruding magnetic component.

4. The apparatus of any combination of claims 1-2, wherein the protruding magnetic component (111) is configured to be hung vertically, and wherein the protruding magnetic component is configured to receive a device (206) to be charged having a looped shape by hanging the device (206) to be charged on the protruding magnetic component.

5. The apparatus of any combination of claims 1-2, wherein the protruding magnetic component (111) is configured to be hung vertically, and wherein the protruding magnetic component (111) is configured to receive a power propagation device (402) comprising a looped portion by hanging the looped portion on the protruding magnetic component (111).

6. The apparatus of claim 5, wherein the wireless power transmitting coil (106) is a first wireless power transmitting coil, the power propagation device (402) comprising:
a first wireless power receiving coil (406) to receive a magnetic flux of the magnetic field (204) from the first wireless power transmitting coil (106), wherein receiving the magnetic flux generates a current;
a second wireless power transmitting coil (408) to receive the current from the first wireless power receiving coil (406), and to generate a magnetic field having a magnetic flux based, in part, on the received current.

7. The apparatus of claim 6, wherein the power propagation device (402) is configured to receive a device (206) to be charged by hanging the device (206, 404) to be charged on the power propagation device (402).

8. The apparatus of claim 7, wherein the device (206, 404) to be charged comprises a second wireless power receiving coil (108) to receive the magnetic flux from the second wireless power transmitting coil (408) of the power propagation device (402).

9. The apparatus of claim 8, wherein the power propagation device (402) comprises a hanger to be hung on the protruding magnetic component (111), and wherein the device (206) to be charged comprises a wearable device (206, 404) comprising one or more additional devices (412) to be charged.

10. The apparatus of any combination of claims 1-2, wherein the wireless power receiving coil (108) is a first wireless power receiving coil (108), the apparatus further comprising one or more additional wireless power receiving coils (602, 604, 606) including at least a second wireless power receiving coil (406, 606) disposed around the protruding magnetic component (111).

11. A method (700) for wireless charging, the method comprising:
forming (702) a means for wireless power transmitting configured to propagate current provided from a charging device (202), the current propagation is to generate a magnetic field based on a resonant frequency detected from a wireless data broadcast from a controller in a device (206) to be charged with a receiving coil (108); and
forming (704) a protruding magnetic component (111); and
disposing (706) the means for wireless power transmitting around the protruding magnetic component (111), wherein a power transmitting unit, PTU, (102) is disposed within the protruding magnetic component (111), the PTU (102) comprising a matching network (138) to match an amplified oscillation provided to a resonator (106).

12. The method (700) of claim 11, wherein forming (704) the protruding magnetic component (111) comprises forming the protruding magnetic component in a non-linear shape to guide a direction of the generated magnetic field (302).

13. The method (700) of any combination of claims 11-12, wherein forming (704) the protruding magnetic component (111) comprises forming the protruding magnetic component protruding from the charging device (202), and wherein the protruding magnetic component is configured to receive a device (206) to be charged having a looped shape in a non-concentric disposition to an axis of the protruding magnetic component.

14. The method (700) of any combination of claims 11-12, wherein the protruding magnetic component (111) is configured to be hung vertically, the method comprising forming a power propagation device (402) having a looped portion, and wherein the protruding magnetic component (111) is configured to receive the power propagation device (402) comprising by hanging the looped portion on the protruding magnetic component (111).

15. The method (700) of claim 14, wherein the means for wireless power transmitting is a first means for wireless power transmitting, wherein forming the power propagation device (402) comprises:
forming a first wireless power receiving coil (406) configured to receive a magnetic flux of the magnetic field (204) from the first means for wireless power transmitting, wherein receiving the magnetic flux generates a current;
forming a second means for wireless power transmitting (408) configured to receive the current from the first wireless power receiving coil (406), and configured to generate a magnetic field having a magnetic flux based, in part, on the received current.

## Patentansprüche

1. Einrichtung zum drahtlosen Laden, die Folgendes umfasst:
eine drahtlos Leistung übertragende Spule (106), die konfiguriert ist, einen Strom weiterzugeben, der von einer Ladevorrichtung (202) bereitgestellt wird, wobei die Stromweitergabe dazu dient, ein magnetisches Feld (204, 302, 410, 506, 508) auf der Grundlage einer Resonanzfrequenz zu erzeugen, die aus drahtlosen Daten detektiert wird, die von einer Steuereinheit in einer Vorrichtung (206) gesendet werden, die mit einer Empfangsspule (108) geladen werden soll, und
eine vorstehende magnetische Komponente (111), wobei die drahtlos Leistung übertragende Spule (106) um die vorstehende magnetische Komponente (111) angeordnet ist und wobei eine Leistung übertragende Einheit, PTU, (102) innerhalb der vorstehenden magnetischen Komponente (111) angeordnet ist, wobei die PTU (102) ein Anpassungsnetz (138) umfasst, um eine verstärkte Schwingung, die einem Resonator (106) bereitgestellt wird, anzupassen.

2. Einrichtung nach Anspruch 1, wobei die vorstehende magnetische Komponente (111) in einer nicht linearen Gestalt gebildet ist, um die Richtung des erzeugten magnetischen Felds (302) zu leiten.

3. Einrichtung nach einer Kombination der Ansprüche 1-2, wobei die vorstehende magnetische Komponente (111) von der Ladevorrichtung (202) vorsteht und konfiguriert ist, eine zu ladende Vorrichtung (206), die eine schleifenförmige Gestalt aufweist, in einer nicht konzentrischen Anordnung zu einer Achse der vorstehenden magnetischen Komponente aufzunehmen.

4. Einrichtung nach einer Kombination der Ansprüche 1-2, wobei die vorstehende magnetische Komponente (111) konfiguriert ist, vertikal aufgehängt zu sein, und wobei die vorstehende magnetische Komponente konfiguriert ist, eine zu ladende Vorrichtung (206) aufzunehmen, die eine schleifenförmige Gestalt aufweist, indem die zu ladende Vorrichtung (206) auf die vorstehende magnetische Komponente gehängt wird.

5. Einrichtung nach einer Kombination der Ansprüche 1-2, wobei die vorstehende magnetische Komponente (111) konfiguriert ist, vertikal aufgehängt zu sein, und wobei die vorstehende magnetische Komponente (111) konfiguriert ist, eine Leistungsweitergabevorrichtung (402), die einen schleifenförmigen Abschnitt umfasst, aufzunehmen, indem der schleifenförmige Abschnitt auf die vorstehende magnetische Komponente (111) gehängt wird.

6. Einrichtung nach Anspruch 5, wobei die drahtlos Leistung übertragende Spule (106) eine erste drahtlos Leistung übertragende Spule ist, wobei die Leistungsweitergabevorrichtung (402) Folgendes umfasst:
eine erste drahtlos Leistung empfangende Spule (406), um einen magnetischen Fluss des magnetischen Felds (204) von der ersten drahtlos Leistung übertragenden Spule (106) zu empfangen, wobei das Empfangen des magnetischen Flusses einen Strom erzeugt;
eine zweite drahtlos Leistung übertragende Spule (408), um den Strom von der ersten drahtlos Leistung empfangenden Spule (406) zu empfangen und ein magnetisches Feld, das einen magnetischen Fluss aufweist, zum Teil auf der Grundlage des empfangenen Stroms zu erzeugen.

7. Einrichtung nach Anspruch 6, wobei die Leistungsweitergabevorrichtung (402) konfiguriert ist, eine zu ladende Vorrichtung (206) aufzunehmen, indem die Vorrichtung (206, 404) auf die Leistungsweitergabevorrichtung (402) gehängt wird.

8. Einrichtung nach Anspruch 7, wobei die zu ladende Vorrichtung (206, 404) eine zweite drahtlos Leistung empfangende Spule (108) umfasst, um den magnetischen Fluss von der zweiten drahtlos Leistung übertragenden Spule (408) der Leistungsweitergabevorrichtung (402) zu empfangen.

9. Einrichtung nach Anspruch 8, wobei die Leistungsweitergabevorrichtung (402) einen Aufhänger umfasst, der auf die vorstehende magnetische Komponente (111) gehängt wird, und wobei die zu ladende Vorrichtung (206) eine tragbare Vorrichtung (206, 404) umfasst, die eine oder mehrere zusätzliche zu ladende Vorrichtungen (412) umfasst.

10. Einrichtung nach einer Kombination der Ansprüche 1-2, wobei die drahtlos Leistung empfangende Spule (108) eine erste drahtlos Leistung empfangende Spule (108) ist, wobei die Einrichtung ferner eine oder mehrere zusätzliche drahtlos Leistung empfangende Spulen (602, 604, 606) umfasst, die mindestens eine zweite drahtlos Leistung empfangende Spule (406, 606) enthalten, die um die vorstehende magnetische Komponente (111) herum angeordnet ist.

11. Verfahren (700) zum drahtlosen Laden, wobei das Verfahren Folgendes umfasst:
Bilden (702) eines Mittels zum drahtlosen Übertragen von Leistung, das konfiguriert ist, einen Strom weiterzugeben, der von einer Ladevorrichtung (202) bereitgestellt wird, wobei die Stromweitergabe dazu dient, ein magnetisches Feld auf der Grundlage einer Resonanzfrequenz zu erzeugen, die aus Daten einer drahtlosen Rundsendung von einer Steuereinheit in einer Vorrichtung (206), die mit einer Empfangsspule (108) geladen werden soll, detektiert wird; und
Bilden (704) einer vorstehenden magnetischen Komponente (111) und
Anordnen (706) des Mittels zum drahtlosen Übertragen von Leistung um die vorstehende magnetische Komponente (111), wobei eine Leistung übertragende Einheit, PTU, (102) innerhalb der vorstehenden magnetischen Komponente (111) angeordnet ist, wobei die PTU (102) ein Anpassungsnetz (138) umfasst, um eine verstärkte Schwingung, die einem Resonator (106) bereitgestellt wird, anzupassen.

12. Verfahren (700) nach Anspruch 11, wobei das Bilden (704) der vorstehenden magnetischen Komponente (111) das Bilden der vorstehenden magnetischen Komponente in einer nicht linearen Gestalt umfasst, um die Richtung des erzeugten magnetischen Felds (302) zu leiten.

13. Verfahren (700) nach einer Kombination der Ansprüche 11-12, wobei das Bilden (704) der vorstehenden magnetischen Komponente (111) das Bilden der vorstehenden magnetischen Komponente, die von der Ladevorrichtung (202) vorsteht, umfasst und wobei die vorstehende magnetische Komponente konfiguriert ist, eine zu ladende Vorrichtung (206), die eine schleifenförmige Gestalt aufweist, in einer nicht konzentrischen Anordnung zu einer Achse der vorstehenden magnetischen Komponente aufzunehmen.

14. Verfahren (700) nach einer Kombination der Ansprüche 11-12, wobei die vorstehende magnetische Komponente (111) konfiguriert ist, vertikal aufgehängt zu sein, wobei das Verfahren das Bilden einer Leistungsweitergabevorrichtung (402), die einen schleifenförmigen Abschnitt aufweist, umfasst und wobei die vorstehende magnetische Komponente (111) konfiguriert ist, die Leistungsweitergabevorrichtung (402) aufzunehmen, indem der schleifenförmige Abschnitt auf die vorstehende magnetische Komponente (111) gehängt wird.

15. Verfahren (700) nach Anspruch 14, wobei das Mittel zum drahtlosen Übertragen von Leistung ein erstes Mittel zum drahtlosen Übertragen von Leistung ist, wobei das Bilden der Leistungsweitergabevorrichtung (402) Folgendes umfasst:
Bilden einer ersten drahtlos Leistung empfangenden Spule (406), die konfiguriert ist, um einen magnetischen Fluss des magnetischen Felds (204) von dem ersten Mittel zum drahtlosen Übertragen von Leistung zu empfangen, wobei das Empfangen des magnetischen Flusses einen Strom erzeugt;
Bilden eines zweiten Mittels (408) zum drahtlosen Übertragen von Leistung, das konfiguriert ist, den Strom von der ersten drahtlos Leistung empfangenden Spule (406) zu empfangen, und das konfiguriert ist, ein magnetisches Feld, das einen magnetischen Fluss aufweist, zum Teil auf der Grundlage des empfangenen Stroms zu erzeugen.

## Revendications

1. Appareil de charge sans fil, comprenant :
une bobine de transmission de puissance sans fil (106) configurée pour propager un courant fourni par un dispositif de charge (202), où la propagation du courant doit générer un champ magnétique (204, 302, 410, 506, 508) sur la base d'une fréquence de résonance détectée à partir de données sans fil diffusées par un contrôleur dans un dispositif (206) à charger avec une bobine de réception (108) ; et
un composant magnétique saillant (111), où la bobine de transmission de puissance sans fil (106) est disposée autour du composant magnétique saillant (111) et où une unité de transmission de puissance, PTU, (102) est disposée dans le composant magnétique saillant (111), la PTU (102) comprenant un réseau d'adaptation (138) pour adapter une oscillation amplifiée fournie à un résonateur (106).

2. Appareil selon la revendication 1, dans lequel le composant magnétique saillant (111) a une forme non linéaire pour guider une direction du champ magnétique généré (302).

3. Appareil selon une combinaison quelconque des revendications 1 et 2, dans lequel le composant magnétique saillant (111) dépasse du dispositif de charge (202) et est configuré pour recevoir un dispositif (206) à charger ayant une forme en boucle dans une disposition non concentrique par rapport à un axe du composant magnétique saillant.

4. Appareil selon une combinaison quelconque des revendications 1 et 2, dans lequel le composant magnétique saillant (111) est configuré pour être suspendu verticalement, et où le composant magnétique saillant est configuré pour recevoir un dispositif (206) à charger ayant une forme en boucle en accrochant le dispositif (206) à charger au composant magnétique saillant.

5. Appareil selon une combinaison quelconque des revendications 1 et 2, dans lequel le composant magnétique saillant (111) est configuré pour être suspendu verticalement, et où le composant magnétique saillant (111) est configuré pour recevoir un dispositif de propagation de puissance (402) comprenant une partie en boucle en accrochant la partie en boucle au composant magnétique saillant (111).

6. Appareil selon la revendication 5, dans lequel la bobine de transmission de puissance sans fil (106) est une première bobine de transmission de puissance sans fil, le dispositif de propagation de puissance (402) comprenant :
une première bobine de réception de puissance sans fil (406) pour recevoir un flux magnétique du champ magnétique (204) provenant de la première bobine de transmission de puissance sans fil (106), où la réception du flux magnétique génère un courant ;
une seconde bobine de transmission de puissance sans fil (408) pour recevoir le courant de la première bobine de réception de puissance sans fil (406), et pour générer un champ magnétique ayant un flux magnétique basé, en partie, sur le courant reçu.

7. Appareil selon la revendication 6, dans lequel le dispositif de propagation de puissance (402) est configuré pour recevoir un dispositif (206) à charger en accrochant le dispositif (206, 404) à charger au dispositif de propagation de puissance (402).

8. Appareil selon la revendication 7, dans lequel le dispositif (206, 404) à charger comprend une seconde bobine de réception de puissance sans fil (108) pour recevoir le flux magnétique de la seconde bobine de transmission de puissance sans fil (408) du dispositif de propagation de puissance (402).

9. Appareil selon la revendication 8, dans lequel le dispositif de propagation de puissance (402) comprend un dispositif de suspension à suspendre sur le composant magnétique saillant (111), et où le dispositif (206) à charger comprend un dispositif portable (206, 404) comprenant un ou plusieurs dispositifs supplémentaires (412) à charger.

10. Appareil selon une combinaison quelconque des revendications 1 et 2, dans lequel la bobine de réception de puissance sans fil (108) est une première bobine de réception de puissance sans fil (108), l'appareil comprenant en outre une ou plusieurs bobines de réception de puissance sans fil supplémentaires (602, 604, 606) comprenant au moins une seconde bobine de réception de puissance sans fil (406, 606) disposée autour du composant magnétique saillant (111).

11. Procédé (700) de charge sans fil, le procédé comprenant les étapes suivantes :
former (702) un moyen de transmission de puissance sans fil configuré pour propager un courant fourni par un dispositif de charge (202), la propagation du courant devant générer un champ magnétique sur la base d'une fréquence de résonance détectée à partir de données sans fil diffusées par un contrôleur dans un dispositif (206) à charger avec une bobine de réception (108) ; et
former (704) un composant magnétique saillant (111) ; et
disposer (706) le moyen de transmission de puissance sans fil autour du composant magnétique saillant (111), où une unité de transmission de puissance, PTU, (102) est disposée dans le composant magnétique saillant (111), la PTU (102) comprenant un réseau d'adaptation (138) pour adapter une oscillation amplifiée fournie à un résonateur (106).

12. Procédé (700) selon la revendication 11, dans lequel la formation (704) du composant magnétique saillant (111) comprend de former le composant magnétique saillant avec une forme non linéaire pour guider une direction du champ magnétique généré (302).

13. Procédé (700) selon une combinaison quelconque des revendications 11 et 12, dans lequel la formation (704) du composant magnétique saillant (111) comprend de former le composant magnétique saillant dépassant du dispositif de charge (202), et où le composant magnétique saillant est configuré pour recevoir un dispositif (206) à charger ayant une forme en boucle dans une disposition non concentrique par rapport à un axe du composant magnétique saillant.

14. Procédé (700) selon une combinaison quelconque des revendications 11 et 12, dans lequel le composant magnétique saillant (111) est configuré pour être suspendu verticalement, le procédé comprenant de former un dispositif de propagation de puissance (402) ayant une partie en boucle, et où le composant magnétique saillant (111) est configuré pour recevoir le dispositif de propagation de puissance (402) en accrochant la partie en boucle sur le composant magnétique saillant (111).

15. Procédé (700) selon la revendication 14, dans lequel le moyen de transmission de puissance sans fil est un premier moyen de transmission de puissance sans fil, où la formation du dispositif de propagation de puissance (402) comprend les étapes suivantes :
former une première bobine de réception de puissance sans fil (406) configurée pour recevoir un flux magnétique du champ magnétique (204) à partir du premier moyen de transmission de puissance sans fil, où la réception du flux magnétique génère un courant ;
former un second moyen de transmission de puissance sans fil (408) configuré pour recevoir le courant de la première bobine de réception de puissance sans fil (406), et configuré pour générer un champ magnétique ayant un flux magnétique basé, en partie, sur le courant reçu.
